# EUROPEAN PATENT SPECIFICATION

(11) **EP 4 376 763 B1**
(45) Date of publication and mention of the grant of the patent: **09.04.2025**
(21) Application number: 22751740.6
(22) Date of filing: 21.07.2022
(51) Int. Cl.: A61C 7/08, A61C 17/22, A61C 19/06, A61C 17/02

(54) **TOOTH ARCH RECEIVING ELEMENT**
ZAHNBOGENAUFNAHMEELEMENT
ÉLÉMENT DE RÉCEPTION D'ARCADE DENTAIRE

(30) Priority: 27.07.2021 EP 21187898
(43) Date of publication of application: 05.06.2024
(73) Proprietor: Koninklijke Philips N.V., 5656 AG Eindhoven (NL)
(72) Inventor: BOERSMA, Joldert Maria, 5656 AG Eindhoven (NL); GERHARDT, Lutz Christian, 5656 AG Eindhoven (NL); BHAT, Ravindra, 5656 AG Eindhoven (NL); BAKKER-VAN DER KAMP, Gertrude Riëtte, 5656 AG Eindhoven (NL); GOTTENBOS, Bart, 5656 AG Eindhoven (NL); BRANDÃO SILVA, Priscilla, 5656 AG Eindhoven (NL)
(74) Representative: Philips Intellectual Property & Standards
(86) International application number: PCT/EP2022/070440
(87) International publication number: WO 2023/006559

(56) References cited:
- WO-A2-2020/017963
- DE-A1- 10 230 736
- US-A1- 2009 208 898
- US-A1- 2020 253 702
- US-B2- 9 504 542

## Description

### FIELD OF THE INVENTION

The invention relates to an element for receiving a tooth arch, for example as part of a tooth cleaning, treatment or protection mouthpiece.

### BACKGROUND OF THE INVENTION

There is significant interest in mouthpieces that can clean the teeth quickly and efficiently. A cleaning mouthpiece typically comprises a tooth arch receiving element and a set of bristles (or other cleaning elements) which are actuated or vibrated within (or with) the tooth arch receiving element.

Automatic tooth brushing using cleaning mouthpieces has become an emerging technology. Several mouthpiece-based dental cleaning systems are in the development stage and claim in particular a short brushing time (e.g. 6-30 seconds). These systems hence have speed and ease of use as the main value drivers.

The mouthpiece is the part of a cleaning system which resides inside the mouth and is fitted to the teeth, with cleaning bristles facing the teeth. Typically the mouthpiece comprises an arch to cover the teeth of a jaw or a pair of arches to cover the teeth of both jaws. The system will typically have other parts (e.g. handle with motor and electronics) which remain external to the mouth, in use.

The mouthpiece or just the bristles are driven to move or vibrate relative to the surface of the teeth to provide a brushing action.

One of the challenges in achieving a satisfactory cleaning performance is to ensure a proper fit of the mouthpiece to the teeth to ensure sufficient bristle reach and cleaning forces being transmitted to the tooth surfaces. As there is a large spread in sizes and curvatures of teeth of people (or indeed animals) as well as large variation in jaw archetypes, it is almost impossible to generate a "one-size-fits-all" solution. Brushing mouthpieces are for example often provided in either one size or in different sizes sizes (e.g. small, medium, large).

For systems with a single size of mouthpiece, the design is often based on average dimensions. However, some customers will experience that it is too large and the bristles might not touch the teeth resulting in poor or no cleaning. Others will not be able to position it on the teeth as it is simply too small.

The invention relates to the fitting of a tooth receiving element to the tooth arch in a personalized way to account for tooth (jaw) and bite type variations seen throughout the population.

US 2009/208898 discloses a mouthpiece which delivers a pressurized cleaning fluid stream.

WO 2020/017963 discloses a mouthpiece having a pressure chamber with a deformable recess wall which carries cleaning bristles. The recess wall moves back and forth in response to the pressure in the pressure chamber to provide a reciprocating motion.

US 2020/253702 discloses a mouthpiece with a flexible membrane formed around enclosed compartments. The pressure in the compartments is regulated to perform a cleaning action.

DE 10230736 discloses a tooth cleaning mouthpiece.

US 9504542 discloses a tooth cleaning mouthpiece formed of a flexible material which can be reversibly deformed. Successive relaxation and contraction of the flexible mouthpiece provides the tooth cleaning function.

### SUMMARY OF THE INVENTION

The invention is defined by the claims.

According to examples in accordance with an aspect of the invention, there is provided a tooth arch receiving element, comprising:
an arch formed of a conformable structure for receiving the teeth/jaw of a user; and
an actuator arrangement for increasing the rigidity of the conformable structure after it has been shaped to correspond to a shape of a tooth arch of a subject during an arch fitting stage.

This element design comprises a conformable arch which can be deformed to match the shape of a subject's teeth. It can then be made rigid so that it can provide a firm support for a cleaning arrangement for cleaning the user's teeth. In this way, the element is matched to the size and shape of the user's oral cavity and tooth positions and orientations. It can provide size fitting as well as contour following (geometry fitting). Thus, the size and shape of the tooth arch may relate to the general arch shape or even the tooth surfaces of the teeth along the tooth arch or even to the position/orientation of both jaws relative to each other (bites types).

The rigidity control preferably sets a temporary or reversible 3D shape of the arch, but it may instead provide shape locking only in certain directions, such as setting only the contour around the dental arch in a single plane. The shape may be set once (for a single user) or it may need resetting from time to time, but not necessarily before each use.

The tooth arch receiving element may be part of a cleaning mouthpiece, but it may be for light treatment, or for tooth whitening, or it may be a mouth guard, mandibular advancement device, or an aligner.

The tooth arch receiving element may be used for people or for animals, such as pets.

The personalized fitting of the element for example enables better reach and coverage of the teeth surface by cleaning bristles (for cleaning the gum line, interproximal areas as well as lingual and buccal areas).

The conformable structure for example comprises at least one chamber of solid-state particles in a fluid, and the actuator arrangement comprises a pressure source for expelling fluid from the chamber thereby to increase the rigidity. The fluid can be a liquid or a gas or a mixture of both. It is preferably a negative pressure source (relative to ambient), but it also be controllable to apply a positive pressure.

This is one way to implement the control of rigidity. It exploits the granular jamming principle to provide a reversible transition between fluid like and solid like states. A filter is for example provided between the chamber and the pressure source to prevent removal of the particles. The particles may be polymer, ceramic, metal or natural. Different particle sizes and shapes may be used, too.

The tooth arch receiving element may further comprise a cleaning and/or treatment arrangement at a surface of the arch facing the teeth.

The cleaning and/or treatment arrangement may be formed as separate parts to the arch, such as a bristle arrangement received in the arch, or it may be the surface of the arch itself. A cleaning arrangement for example comprises a bristle arrangement or a tuft layout or elastomer based cleaning elements. The bristle arrangement for example lines the inner and/or outer surface of the arch.

The tooth arch receiving element may further comprise a controller for modulating the pressure source to implement operation of the cleaning and/or treatment arrangement. The cleaning and/or treatment function may in this way be implemented with the same pressure source. By adapting the rigidity in a cyclic way, micro-motions can be induced by using the same pressure control as is used for setting the stiffness.

The actuator arrangement is for example also for applying a pressure modulation to the chamber of particles during the fitting stage, such as a positive pressure. This positive pressure may be used to improve the initial contour following and grip in the less rigid state of the conformable arch.

A positive slope or increase in pressure may be used, so that pressure gradients over time (dp/dt), or absolute pressure magnitudes (Δp) are used.

The actuator arrangement may also apply a pressure modulation, such as a positive pressure as part of the operation of a cleaning arrangement.

The chamber of solid-state particles may comprise a line of chamber segments each with an independently controllable pressure level.

The different pressure levels may be achieved by separate pressure sources (compressors or vacuum generators) or else the geometry and material properties of the chamber may be designed to provide control of the operating pressure levels in different chamber segments.

The line of chamber segments may be used to induce a linear movement over or along the jaw, and thereby provide the motion desired for implementing cleaning. It may be possible to control up-down motion as well as motion along the tooth arch direction.

A positive pressure level may also be controlled during an initial fitting stage as mentioned above.

The line of chamber segments may comprise at least two chamber segments containing particles and an intermediate segment which does not contain particles, and the actuator arrangement is adapted to inflate or deflate the intermediate segment.

This intermediate chamber functions as a controller. For example, a positive pressure will push the chamber segments at each side outwardly and a negative pressure will pull them in. By locking one of the end chamber segments (by increasing its local rigidity) a movement of one chamber along the teeth can be controlled. In combination, the whole conformable arch may crawl along the teeth to reach the full jaw. A similar arrangement may be used to allow the cleaning and/or treatment arrangement to move up and down.

The arch may comprise a first section with a first conformable structure for positioning at the jaw side of the gum line and a second section with a second conformable structure for positioning at the tooth side of the gum line.

The sections can have different characteristics. The first conformable structure can conform to and move along the gums and the second conformable structure can conform to and move along the teeth.

The structures can be controlled to conform and move in an alternating or desynchronized manner like a caterpillar. There may thus be sequential steps of conforming and moving. Some units may be in a conforming state while others are deflated and can move.

The first and second sections are for example joined by a coupling element. This enables the first conformable structure to grip the gums while the second conformable structure cleans the teeth and vice versa.

The tooth arch receiving element may comprise an outer shell, and a biasing arrangement for pushing the arch against the teeth during the fitting stage.

This outer shell helps to steer the conformable arch to the teeth or gums during fitting and before/while a negative pressure is applied.

The biasing arrangement may comprise an air compartment, and the actuator arrangement further comprises a pressure source for applying a pressure to the air compartment. Thus, a separate air compartment may be used to push the particle chamber towards the teeth during the arch fitting stage.

Alternatively, the biasing arrangement may comprise a magnetic actuator or a spring arrangement. Thus, there are other ways to bias the particle chamber to the teeth.

In an example which is not part of the present invention, the conformable structure may comprise a fluid which increases its inherent viscosity and effective fluid stiffness when exposed to a magnetic field and the actuator arrangement comprises a magnetic field source. This provides an alternative way to control the rigidity of the arch. Fluid dampers using magnetic fields may be used to change the viscosity of the fluid and in that way provide damping or locally varying (e.g. higher) stiffness. Magnetorheological ("MR") dampers exploit the physical properties of MR fluids. MR fluids change their viscosity when subject to a magnetic field. An MR fluid consists of a mixture of oil (usually a silicone oil) and micro-particles sensitive to the magnetic field (e.g. iron particles).

The fitting stage will not leave any space for bristles or other cleaning arrangement between the arch and the teeth. The fitting may for example be performed with the bristles already in place, but this risks the bristles becoming deformed during the arch fitting stage.

An alternative option is to perform the fitting step with a two layer material in which the inner layer (close to the dental arch) creates a prescribed distance between the tooth arch receiving element and the teeth, and can be replaced by bristle pads. In this case, the tooth arch receiving element may comprise an insert to be fitted to the arch during the arch fitting stage, and may further comprise a cleaning and/or whitening arrangement to replace the insert after the arch fitting stage.

The arch fitting thus takes place without the cleaning and/or whitening arrangement in place, but leaves a space for adding the specific arrangement (bristles, sponge, light guide, whitening paste, fluid channels, electrodes etc.)

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a tooth arch receiving element;
Figure 2 shows an example of a conformable structure of the arch;
Figure 3 shows a flexible element formed of the particles;
Figure 4 shows an initial unjammed state of the arch;
Figure 5 shows sinking-in of the teeth into the arch;
Figure 6 shows application of a vacuum to conform the arch to the shape of the tooth arch;
Figure 7 shows a pressure profile used to create controllable and reversible tuning of material rigidity to enable micro motions at the tooth-interface;
Figure 8 shows a line of chamber segments each with an independently controllable negative pressure level;
Figure 9 shows a variant of the arch in which the caterpillar structure is be formed of a lower part and an upper part;
Figure 10 shows an example in which the fitting is performed with an insert fitted to the arch;
Figure 11 shows a segmented structure which can be locked into shape by various means; and
Figure 12 shows a deformable structure in which wires or layers are locked by an external force.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a tooth arch receiving element having an arch formed of a conformable structure for receiving the teeth of a user. An actuator is used to increase the rigidity of the conformable structure after it has been shaped to correspond to a shape of a tooth arch of a subject during an arch fitting stage.

In this way, the arch is quite flexible when not active (e.g. not cleaning or brushing). Once placed in the mouth, the user bites on the arch and its shape is adapted to fit as closely as possible to the teeth. Subsequently, this shape is fixed by an actuator. For example, for an arch formed as chamber containing particles, a vacuum or negative pressure is applied to implement a stiffening function. This stiffened arch is then used to hold the cleaning elements and their actuators at the right position relative to the teeth and gum line.

The invention will be described with reference to a cleaning mouthpiece, although the invention may be applied to a light treatments system, or a tooth whitening system, or it may be a mouth guard, mandibular advancement device, or an aligner.

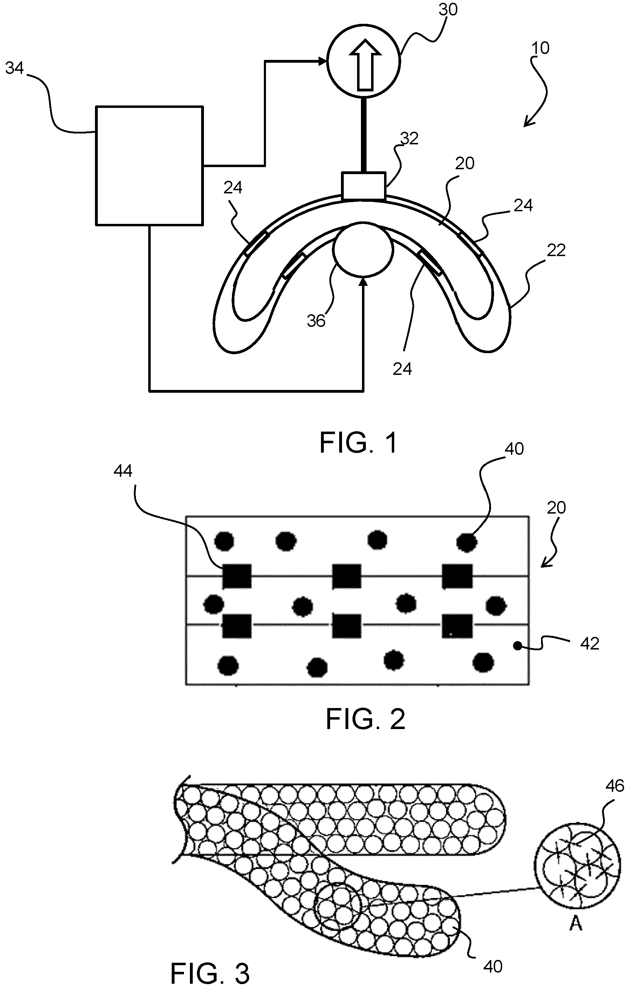

Figure 1 shows tooth arch receiving element 10, comprising an arch 20 formed of a conformable structure for receiving the teeth of a user. In this example, the arch 20 is received in an outer shell 22.

A biasing arrangement 24 is provided for pushing the arch 20 against the teeth during an arch fitting stage. This biasing arrangement may also be used to create the desired cleaning motion as described further below, although other arrangements are possible for providing a cleaning movement. The rigid outer shell can also serve as a biasing arrangement.

As shown in Figure 2, in this example, the conformable structure of the arch 20 comprises at least one chamber of solid-state particles 40 in a fluid 42.

Flexible volumes filled with particles can be depressurized to create a stiff shape. This approach is generally known as a bulk locking solution. Figure 2 also shows flexures or joints 44 which are used to constrain the range of deformation of the overall structure or control the deformation of the global shape of the conformable structure 20 by inducing locally rigid points.

Figure 3 shows a flexible element formed of the particles 40. The arrows 46 represent the interaction forces between the elements. This granular jamming locks the particles with each other when an external force is applied, providing a shape locking function.

Returning to Figure 1, the tooth arch receiving element 10 further comprises an actuator arrangement for increasing the rigidity of the conformable structure after it has been shaped to correspond to a shape of a tooth arch of a subject, during the arch fitting stage. The actuator arrangement in the example shown comprises a pressure source 30 for expelling fluid from the chamber thereby to increase the rigidity, in the manner shown in Figure 3. In this mode, the pressure source functions as a negative pressure source, but it may also be controllable to apply a positive pressure.

The negative pressure source is connected to the chamber by a filter 32 which prevents escape of the particles. The negative pressure source is controlled by a controller 34.

The example of Figure 1 also shows an optional eccentric drive arrangement 36 for providing reciprocal motion of the arch 20 within the shell 22, or indeed the arch and shell as a combined unit. Such eccentric drives are known for providing the reciprocal brushing motion of cleaning mouthpieces. However, any suitable motor of transmission design may be used to generate a mechanical cleaning motion or oscillation or vibration.

The eccentric drive may apply a controlled device vibration which can be combined with a vacuum or negative pressure profile applied to the arch 20. By doing so, for example, an up-down oscillation (as a micro-motion) may be generated (e.g. from the top of the tooth towards gum line) using the eccentric drive train while the contour following (motion towards and away from the tooth surface) is achieved by application of vacuum or negative (offset) pressure profiles.

As mentioned above, the (optional) biasing arrangement 24 urges the chamber against the teeth using the shell as a reference. The biasing arrangement may comprise a bellows structure i.e. an air compartment, and the actuator arrangement may then further comprise another actuator or pressure source for applying a pressure to the air compartment. The biasing arrangement may instead comprise a magnetic actuator or a mechanical spring arrangement.

The shell may be a permanent part of the structure or it may be used only for the fitting stage.

If the biasing arrangement is a bellow structure, the bellows can be inflated and deflated to create a movement of a cleaning arrangement such as bristles. The pump used to activate the bellows can be the same one as used to create the vacuum in the chamber.

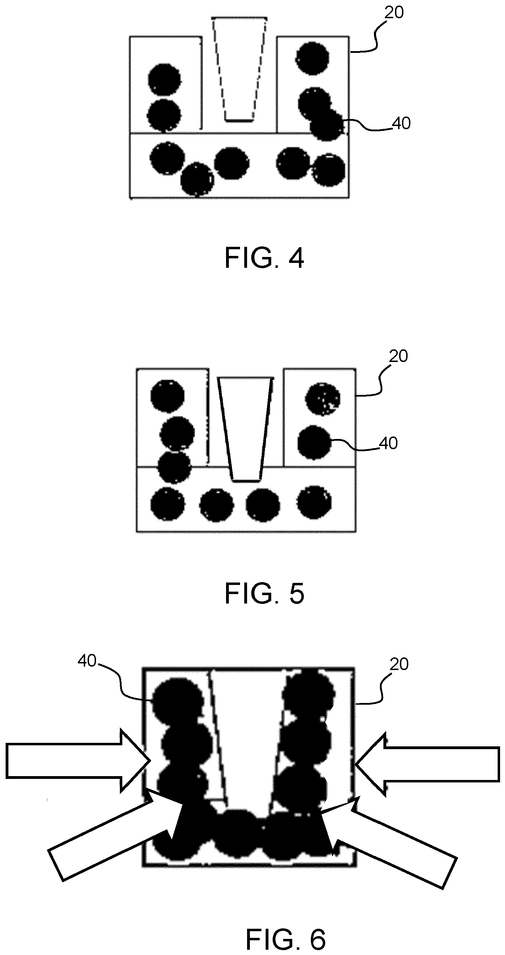

In order to brush the teeth, the user inserts the device into the oral cavity. During this initial step, the arch 20 is in unjammed state as shown in the cross-sectional Figure 4. The arch 20 is soft, pliable and can conform to some extent to the geometry of the jaw/tooth. This involves sinking-in of the teeth into the arch as shown in Figure 5.

The arch is typically a soft silicone (or any other suitable elastomer) filled with particles. Upon application of a vacuum or negative pressure as shown in Figure 6, the granular jamming chambers shrink and become densified, and thereby start to conform to the shape of the tooth arch. This results in an effective shape change and material stiffening. As a consequence of the vacuum or negative pressure, the particles move and are packed more densely thereby exerting lateral/vertical pressure and forces onto the tooth surfaces, as shown by the arrows.

The mouthpiece may comprise multiple vacuum chambers filled with jamming materials having different particle sizes and/or shapes to tune the geometry pattern of the contact interface (e.g. specific geometry for the gum line, and for interdental cleaning).

The surface of the arch which faces the teeth may have a gripping profile, such as protruding lamella or fins (V-shaped, U-shaped, pyramid-shaped) for providing a cleaning function as well as producing fluid drainage channels. These may be used for efficient toothpaste slurry distribution at the interface between the arch and the teeth upon application of vacuum.

The granular materials can be polymer, ceramic, metal, or natural, such as ground coffee beans, black pepper, sun-dried barberry, SiO2 spheres, polycarbonate beads, or any other natural or man-made polymer particles.

The design enables improved contour following thereby improving fitting, and also gives better load or energy transfer to the cleaning elements due to variable stiffness control. As the material stiffens, higher effective contact stiffness and less damping results. Higher effective contact stiffness and/or less damping will result in higher load and energy transfer, in particular load transfer from the cleaning elements to the tooth surface, and motor energy transfer from the motor to the cleaning elements. The fitting enables a maximization of friction at the interface so that even with low applied forces, better interlocking and contour following is achieved.

The micro-motions for cleaning can be generated by using the eccentric motor and also controlling the vacuum applied: Vacuum profiles may be selected to induce controlled displacement (e.g. occlusal brushing) of the jammed granular chambers. Alternatively, the pressure control of the chambers may suffice, or indeed the biasing arrangement may be used to provide arch motion after it has been transformed to the stiff state.

The mouthpiece may use conventional tufts, but a tuft-free mouthpiece is also possible because the particles may be used to provide a textured pattern when the vacuum is applied.

Various drive schemes may be applied to the negative pressure source to create controllable stiffness and micro motions at the interface between the arch and the teeth.

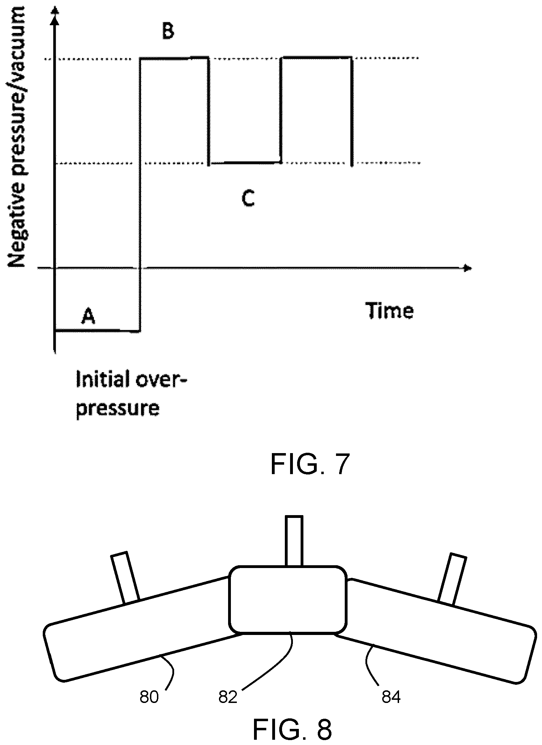

Figure 7 shows an example pressure profile used to create controllable and reversible tuning of material rigidity to enable micro motions at the tooth-interface. The controller sends control signals to the negative pressure source 30 to generate a variable offset (vacuum) pressure profiles.

A slight overpressure is applied during an initial fitting stage (time period A). This is used to improve the initial contour following and grip in the unjammed state.

To provide controlled displacement (e.g. for occlusal brushing), the vacuum or negative pressure is varied after the initial fitting stage between an upper value (time period B) and lower value (time period C). Thus, a negative pressure typically is used to induce and control the level of jamming, whereas a slight overpressure may be used in the unjammed state.

The use of multiple chambers also enables a caterpillar design which can create automated motion along the jaw.

Figure 8 shows a line of chamber segments 80,82,84 each with an independently controllable negative pressure level. In one example, the line of chamber segments comprises at least two chamber segments 80, 84 containing particles 40 (not shown in Figure 8) and an intermediate segment 82 which does not contain particles. The structure thus has at least three sections, which can be placed at varying negative or positive pressure levels. The actuator arrangement is adapted to inflate or deflate the intermediate segment 82 for motion control as well as controlling the pressure in the other segments both for stiffness control and for controlling a caterpillar-like movement.

The segments thereby create a caterpillar structure which can alternatingly or intermittently conform to and move along the jaw (mesial-distal) but also in an up-down motion along the tooth arch. In such a manner, both a cleaning and brushing motion can be created by exploiting the granular jamming effect.

The chambers 80, 84 can be locked by the jamming effect or unlocked. When one of them is locked, the other can be moved towards or away from the locked chamber by controlling the middle chamber 82. In this way, the caterpillar structure can be controlled to crawl over the teeth to automatically reach the full jaw, giving a hands-free mouthpiece operation.

In more detail, for moving the front section, the rear section should have high vacuum to hold the position and the front section should have a low vacuum to allow sliding over the teeth.

The free section (the front in this scenario) may also have an oscillating vacuum (as shown in Figure 7) such that it vibrates as it is moving. This can avoid the need for a separate actuator such as the eccentric motor drive. Thus, the caterpillar design may enable general movement as well as a reciprocal brushing micro motion.

The free section front will move further when the middle section is inflated. If subsequently the driving vacuum is reversed between the front and the rear jamming chambers, the front section will become clamped and the rear can glide over the teeth, thus creating the caterpillar motion. Deflating the middle section will cause it to shrink, also moving the rear end further along the dental arch toward the front end.

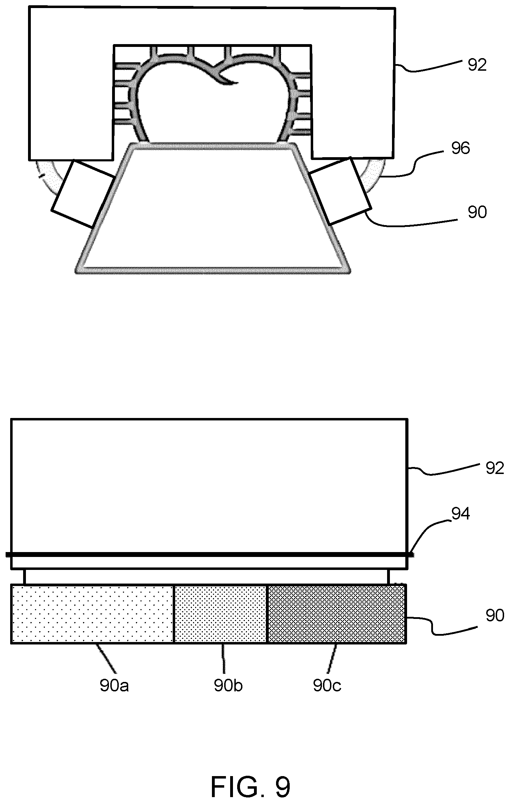

Figure 9 shows a variant in which the caterpillar structure can be formed of a lower part 90 and an upper part 92, each of which has different jamming chamber characteristics. The top image shows a cross section across the tooth width and the bottom image shows a side view in the tooth length direction.

The upper part 92 is located above the gum line 94 and surrounds the teeth, and the lower part 90 is located below the gum line and attached to the gums.

Thus, there is a first section with a first conformable structure 90 for positioning at the jaw side of the gum line and a second section with a second conformable structure 92 for positioning at the tooth side of the gum line. The first and second sections are joined by a flexible coupling 96 such as a rubber joint or a spring element or a hinge.

The first section 90 has multiple lower chambers 90a, 90b, 90 to which different pressure and vacuum levels can be applied to enable the caterpillar motion as explained above. Thus, the first section 90 can crawl over the gums enabling automated worm-like mesial-distal motion. The upper section 92 enables good clamping while easily confirming to the user tooth geometry.

The upper section 92 could have one or multiple jamming chambers with the (negative) pressure controlled in a way to allow easy conformation to the tooth geometry while allowing clamping of cleaning elements against the tooth surface. The lower section should have at least three sections, with the rear and front sections being granular jamming chambers with different vacuum or pressure levels, such as to allow the mouthpiece to crawl over the gums. The three sections can bend as well as elongate and compress.

Thus, in this example, the crawling motion is along the gums, and the section over the teeth follows this motion. The caterpillar motion may be used over the teeth as well or instead, by forming the section over the teeth with the caterpillar structure.

As mentioned above, the arch may be fitted with cleaning bristles or tufts or elastomer, sponge-like cleaning elements or fluid channels or light emitting elements (LEDs) or electrodes, thereby providing a cleaning and/or treatment arrangement at surface(s) of the arch facing the teeth/gums.

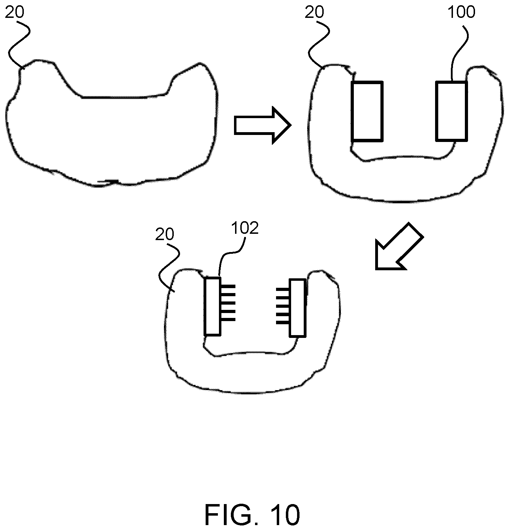

Figure 10 shows an example in which the fitting is performed with an insert 100 fitted to the arch, and the design further comprises a bristle arrangement to replace the insert after the arch fitting stage.

Figure 10 shows the free state, followed by the application of the insert 100 and the shape fitting, and then the replacement of the insert 100 with the cleaning arrangement 102.

To fit the arch, the user may replace bristle pads first by the insert 100. The mouthpiece containing the insert is then put into the mouth and the user bites in the mouthpiece.

When a biasing arrangement is used, such as an air compartment, it used to move the particle chamber towards the teeth. Subsequently a vacuum is created in the chamber to turn it into a stiff structure. The biasing arrangement is depressurized and the user can take out the mouthpiece and replace the insert by the bristle pads.

This step may be performed only once if the mouthpiece is maintained with the fixed shape after use. However, the shape locking may be reversed after each oral cleaning to enable the user to clean the mouthpiece more easily.

The invention may be applied to a U-shaped mouthpiece (for only the upper or lower jaw), but the same approach may be applied to a H-shaped mouthpiece that treats the upper and lower jaw at same time, or indeed it may be applied to a J-shaped arch (for one side of one jaw or two jaws; or a C-shaped arch (a full mouthpiece cleaning one or both jaws at the same time) or even for a system for treating one or more individual teeth.

The examples above are based on the particle jamming effect. There are other possible ways to transform a flexible structure into a stiff structure.

Hydrostatic pressure may be used by using specific materials that become more rigid when exposed to an external energy field. For example, instead of using particle chambers, an electromagnetic fluid may be used that becomes highly viscous when exposed to a magnetic field. Examples of such magnetic fluids are already applied in hydraulic dampeners.

Another example is the use of a non-Newtonian fluid that behaves as a solid when exposed to fast movement such as a high speed vibration. Polydimethylsiloxane (PDMS) is an example of a viscoelastic substance resulting in non-Newtonian behavior. Viscoelasticity is a type of non-Newtonian flow, characterizing material that acts as a viscous liquid over a long time period but as an elastic solid over a short time period.

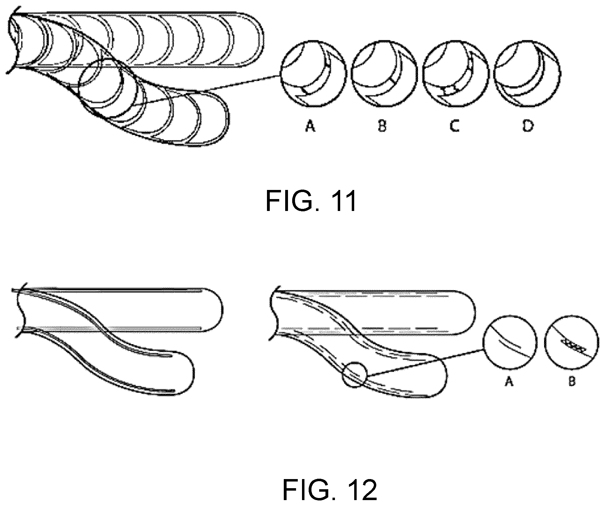

Instead of locking the 3D shape and volume, the shape locking may be achieved in certain directions. The joints 44 of Figure 3 may be used for this purpose. This may enable a better contour following of the dental arch. The arch fitting may also be fine-tuned in certain directions. For example, if flexible fingers on a mouthpiece may be used to massage the gums, and the fit may be improved by applying a segment jamming approach of Figure 11 or a wire/layer jamming approach of Figure 12 to these fingers.

Figure 11 shows a segmented structure which can be locked into shape by multiple tensioning wires (A), a central tensioning wire (B), a bellows connection (C) or soft material layers (D).

Figure 12 shows a deformable structure in which wires (A) or layers (B) are locked by an external force to create a more stiff structure. The stiffness results because the length of the wires or layers become fixed, resulting in a locked shape and hence increased stiffness.

Segment locking and wire/layer jamming approaches are possible as alternatives or additions to the particle jamming solution explained in detail above.

A wire jamming solution may also be used to shape the bristle pads such that the bristles are directed more towards the gum line. This may involve an additional shaping step which the user has to perform after placing the bristle pads in the dental arch.

The invention has been described with reference to a cleaning mouthpiece. However, the arch shaping solution may be used for an arch for receiving teeth for any purpose, such as tooth cleaning, tooth whitening, tooth alignment, tooth protection etc. For example, it may be used in a scrubbing-based mouthpiece which provides cleaning through friction of sponge-like material.

The mouthpiece may have multiple functions, such as a primary cleaning function and a secondary whitening or treatment function. The cleaning and/or treatment arrangement may for example comprise any combination of a bristle arrangement, a tuft layout, elastomer based cleaning elements, fluid channels (for delivery of treatment compounds), electrodes, light emitting elements, and light guides.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A tooth arch receiving element (10), comprising:
an arch (20) formed of a conformable structure for receiving the teeth of a user; and
an actuator arrangement (30) for increasing the rigidity of the conformable structure after it has been shaped to correspond to a shape of a tooth arch of a subject during an arch fitting stage;
**characterised by**,
a controller (34) for controlling the actuator arrangement,
wherein the conformable structure comprises at least one chamber of solid-state particles in a fluid, and the actuator arrangement comprises a pressure source for expelling fluid from the chamber thereby to increase the rigidity, and
wherein the pressure source is controllable to apply a negative pressure and is connected to the at least one chamber by a filter (32) which prevents escape of the solid-state particles.

2. The tooth arch receiving element of claim 1, further comprising a cleaning and/or treatment arrangement (102) at a surface of the arch facing the teeth,

3. The element of claim 2, wherein the cleaning and/or treatment arrangement comprises a bristle arrangement or a tuft layout or elastomer based cleaning elements and/or fluid channels and/or electrodes and/or light emitting elements or light guides.

4. The tooth arch receiving element of claim 2 or 3, wherein the controller (34) is further for modulating the pressure source to implement operation of the cleaning and/or treatment arrangement.

5. The tooth arch receiving element of any one of claims 1 to 4, wherein the actuator arrangement (30) is further for applying a pressure modulation to the chamber of particles during the fitting stage.

6. The tooth arch receiving element of any one of claims 1 to 5, wherein the chamber of solid-state particles comprises a line of chamber segments (80,82,84) each with an independently controllable pressure level.

7. The tooth arch receiving element of claim 6, wherein the line of chamber segments comprises at least two chamber segments (80,84) containing particles and an intermediate segment (82) which does not contain particles, and the actuator arrangement is adapted to inflate or deflate the intermediate segment.

8. The tooth arch receiving element of any one of claims 1 to 7, wherein the arch comprises a first section (90) with a first conformable structure for positioning at the jaw side of the gum line and a second section (92) with a second conformable structure for positioning at the tooth side of the gum line.

9. The tooth arch receiving element of claim 8, wherein the first and second sections are joined by a coupling element (96) such as a rubber joint or a spring element or a hinge.

10. The tooth arch receiving element of any one of claims 1 to 9, comprising an outer shell (22), and a biasing arrangement (24) for pushing the arch against the teeth during the fitting stage.

11. The tooth arch receiving element of claim 10, wherein the biasing arrangement (24) comprises an air compartment, and the actuator arrangement further comprises a pressure source for applying a pressure to the air compartment.

12. The tooth arch receiving element of claim 10, wherein the biasing arrangement (24) comprises a magnetic actuator or a spring arrangement.

13. The tooth arch receiving element of any one of claims 1 to 12, comprising an insert to be fitted to the arch during the arch fitting stage, and further comprising a cleaning and/or treatment arrangement to replace the insert after the arch fitting stage.

## Patentansprüche

1. Zahnbogen-Aufnahmeelement (10), umfassend:
einen Bogen (20), der aus einer anpassungsfähigen Struktur zum Aufnehmen der Zähne eines Benutzers ausgebildet ist; und
eine Aktuatoranordnung (30) zum Erhöhen der Steifigkeit der anpassungsfähigen Struktur, nachdem sie gestaltet wurde, um einer Gestalt eines Zahnbogens eines Subjekts während einer Bogenanpassungsphase zu entsprechen;
**gekennzeichnet durch**
eine Steuereinheit (34) zum Steuern der Aktuatoranordnung,
wobei die anpassungsfähige Struktur mindestens eine Kammer von Festkörperpartikeln in einem Fluid umfasst, und die Aktuatoranordnung eine Druckquelle zum Ausstoßen von Fluid aus der Kammer umfasst, um dadurch die Steifigkeit zu erhöhen, und
wobei die Druckquelle steuerbar ist, um einen Unterdruck anzuwenden, und mit der mindestens einen Kammer durch einen Filter (32) verbunden ist, der das Entweichen der Festkörperpartikel verhindert.

2. Zahnbogen-Aufnahmeelement nach Anspruch 1, weiter umfassend eine Reinigungs- und/oder Behandlungsanordnung (102) an einer Oberfläche des Bogens, die den Zähnen zugewandt ist.

3. Element nach Anspruch 2, wobei die Reinigungs- und/oder Behandlungsanordnung eine Borstenanordnung oder ein Büschellayout oder Elastomer-basierte Reinigungselemente und/oder Fluidkanäle und/oder Elektroden und/oder lichtemittierende Elemente oder Lichtleiter umfasst.

4. Zahnbogen-Aufnahmeelement nach Anspruch 2 oder 3, wobei die Steuereinheit (34) weiter zum Modulieren der Druckquelle ist, um den Betrieb der Reinigungs- und/oder Behandlungsanordnung zu implementieren.

5. Zahnbogen-Aufnahmeelement nach einem der Ansprüche 1 bis 4, wobei die Aktuatoranordnung (30) weiter zum Anwenden einer Druckmodulation auf die Kammer von Partikeln während der Anpassungsphase ist.

6. Zahnbogen-Aufnahmeelement nach einem der Ansprüche 1 bis 5, wobei die Kammer von Festkörperpartikeln eine Reihe von Kammersegmenten (80, 82, 84) umfasst, jeweils mit einem unabhängig steuerbares Druckniveau.

7. Zahnbogen-Aufnahmeelement nach Anspruch 6, wobei die Reihe von Kammersegmenten mindestens zwei Kammersegmente (80, 84) umfasst, die Partikel enthalten, und ein Zwischensegment (82), das keine Partikel enthält, und die Aktuatoranordnung adaptiert ist, um das Zwischensegment aufzublasen oder die Luft abzulassen.

8. Zahnbogen-Aufnahmeelement nach einem der Ansprüche 1 bis 7, wobei der Bogen eine erste Sektion (90) mit einer ersten anpassungsfähigen Struktur zum Positionieren an der Kieferseite des Zahnfleischsaums und eine zweite Sektion (92) mit einer zweiten anpassungsfähigen Struktur zum Positionieren an der Zahnseite des Zahnfleischsaums umfasst.

9. Zahnbogen-Aufnahmeelement nach Anspruch 8, wobei die erste und die zweite Sektion durch ein Kopplungselement (96), wie eine Gummigelenk, oder ein Federelement oder ein Scharnier, verbunden sind.

10. Zahnbogen-Aufnahmeelement nach einem der Ansprüche 1 bis 9, umfassend eine äußere Schale (22) und eine Vorspannungsanordnung (24) zum Drücken des Bogens gegen die Zähne während der Anpassungsphase.

11. Zahnbogen-Aufnahmeelement nach Anspruch 10, wobei die Vorspannungsanordnung (24) ein Luftabteil umfasst, und die Aktuatoranordnung weiter eine Druckquelle zum Anwenden eines Drucks auf das Luftabteil umfasst.

12. Zahnbogen-Aufnahmeelement nach Anspruch 10, wobei die Vorspannungsanordnung (24) einen magnetischen Aktuator oder eine Federanordnung umfasst.

13. Zahnbogen-Aufnahmeelement nach einem der Ansprüche 1 bis 12, umfassend einen Einsatz, der während der Bogenanpassungsphase an den Bogen angepasst werden soll, und weiter umfassend eine Reinigungs- und/oder Behandlungsanordnung, um den Einsatz nach der Bogenanpassungsphase zu ersetzen.

## Revendications

1. Élément de réception d'arcade dentaire (10), comprenant :
une arcade (20) formée d'une structure adaptable destinée à recevoir les dents d'un utilisateur ; et
un agencement actionneur (30) pour augmenter la rigidité de la structure adaptable après qu'elle a été façonnée pour correspondre à une forme d'une arcade dentaire d'un sujet pendant une étape d'ajustement d'arcade ;
**caractérisé par**,
un dispositif de commande (34) pour commander l'agencement actionneur,
dans lequel la structure adaptable comprend au moins une chambre de particules à l'état solide dans un fluide, et l'agencement actionneur comprend une source de pression pour expulser le fluide de la chambre afin d'augmenter ainsi la rigidité, et
dans lequel la source de pression est commandable pour appliquer une pression négative et est reliée à la au moins une chambre par un filtre (32) qui empêche l'échappement des particules à l'état solide.

2. Élément de réception d'arcade dentaire selon la revendication 1, comprenant en outre un ensemble de nettoyage et/ou de traitement (102) au niveau d'une surface de l'arcade faisant face aux dents.

3. Élément selon la revendication 2, dans lequel l'ensemble de nettoyage et/ou de traitement comprend un agencement de poils ou une disposition de touffes ou des éléments de nettoyage à base d'élastomère et/ou des canaux de fluides et/ou des électrodes et/ou des éléments émetteurs de lumière ou des guides de lumière.

4. Élément de réception d'arcade dentaire selon la revendication 2 ou 3, dans lequel le dispositif de commande (34) sert en outre à moduler la source de pression pour mettre en œuvre l'opération de l'ensemble de nettoyage et/ou de traitement.

5. Élément de réception d'arcade dentaire selon l'une quelconque des revendications 1 à 4, dans lequel l'agencement actionneur (30) sert en outre à appliquer une modulation de pression à la chambre de particules pendant l'étape d'ajustement.

6. Élément de réception d'arcade dentaire selon l'une quelconque des revendications 1 à 5, dans lequel la chambre de particules à l'état solide comprend une ligne de segments de chambre (80, 82, 84) présentant chacun un niveau de pression commandable indépendamment.

7. Élément de réception d'arcade dentaire selon la revendication 6, dans lequel la ligne de segments de chambre comprend au moins deux segments de chambre (80, 84) contenant des particules et un segment intermédiaire (82) qui ne contient pas de particules, et l'agencement actionneur est conçu pour gonfler ou dégonfler le segment intermédiaire.

8. Élément de réception d'arcade dentaire selon l'une quelconque des revendications 1 à 7, dans lequel l'arcade comprend une première section (90) avec une première structure adaptable pour le positionnement du côté mâchoire de la ligne gingivale et une seconde section (92) avec une seconde structure adaptable pour le positionnement du côté dent de la ligne gingivale.

9. Élément de réception d'arcade dentaire selon la revendication 8, dans lequel les première et seconde sections sont jointes par un élément de couplage (96) tel qu'un joint en caoutchouc ou un élément à ressort ou une charnière.

10. Élément de réception d'arcade dentaire selon l'une quelconque des revendications 1 à 9, comprenant une coque extérieure (22) et un ensemble de sollicitation (24) pour pousser l'arcade contre les dents pendant l'étape d'ajustement.

11. Élément de réception d'arcade dentaire selon la revendication 10, dans lequel l'agencement de sollicitation (24) comprend un compartiment à air, et l'agencement actionneur comprend en outre une source de pression pour appliquer une pression au compartiment à air.

12. Élément de réception d'arcade dentaire selon la revendication 10, dans lequel l'agencement de sollicitation (24) comprend un actionneur magnétique ou un agencement à ressort.

13. Élément de réception d'arcade dentaire selon l'une quelconque des revendications 1 à 12, comprenant un insert à placer sur l'arcade pendant l'étape d'ajustement d'arcade, et comprenant en outre un ensemble de nettoyage et/ou de traitement destiné à remplacer l'insert après l'étape d'ajustement d'arcade.
